# EUROPEAN PATENT APPLICATION

(11) **EP 2 894 504 A1**
(43) Date of publication of application: **15.07.2015**
(21) Application number: 13835710.8
(22) Date of filing: 05.09.2013
(51) Int. Cl.: G02B 21/00, G02B 21/36

(54) **MICROSCOPE AND METHOD FOR CONTROLLING SAME**

(30) Priority: 07.09.2012 KR 20120099447
(71) Applicant: Nanoentek Inc., Seoul 152-740 (KR); Lee, Jae-Hwa, Yongin-si, Gyeonggi-do 446-589 (KR); Ahn, Sang-Hwa, Seoul 153-030 (KR)
(72) Inventor: LEE, Jae-Hwa, Yongin-si Gyeonggi-do 446-589 (KR); AHN, Sang-Hwa, Seoul 153-030 (KR)
(74) Representative: Louis Pöhlau Lohrentz
(86) International application number: PCT/KR2013/008029
(87) International publication number: WO 2014/038871

(57) **Abstract**

Disclosed is a microscope and a method of controlling the same. According to the one or more of the embodiments of the present inventions relating to the microscope, an optical module for observing cells may be separated from a control module to be disposed in a narrow space such as the inside of an incubator or the inside of a clean bench, and is capable of observing cells while measuring a distribution of the cells (confluence) in a predetermined cycle.

## Description

### BACKGROUND OF THE INVENTION

### Field of the Invention

One or more aspects of the present invention relate to a microscope and a method of controlling the same, and more particularly, to a microscope in which an optical module for observing cells may be separated from a control module to be disposed in a narrow space such as the inside of an incubator or the inside of a clean bench, and which is capable of observing cells while measuring a distribution of the cells (confluence) in a predetermined cycle, and a method of controlling the same.

### Background Art

In general, a microscope is an apparatus that magnifies microscopic objects, microorganisms, cells, etc., which cannot be observed with human eyes, to be observed, and is mainly used to culture and observe microscopic objects such as cells in the field of medicine or the field of biology.

In relation to biological research which is a field to a microscope is mainly applied, it is efficient to dispose a microscope in an incubator for culturing cells or a clean bench prepared in a germ-free environment so as to observe a sample. However, since the size of the inside of the incubator or the size of the inside of the clean bench is limited, it is difficult to dispose a microscope therein to observe a process of cultivating cells.

Thus, during culture of a sample in an incubator, a researcher has to take the sample out of the incubator and move the sample onto a microscope so as to observe the sample. However, an environment of the sample changes and the sample is thus likely to be polluted when the sample is taken out of the incubator. Also, an experiment result may be distorted due to vibration caused by the movement of the sample and an operation of the microscope.

In general, since a process of cultivating cells is performed for a long time, the cells should be thus observed using a microscope for a long time. Thus, it will require a large amount of time and excessive physical labor for a user to observe the process of cultivating cells and measure a distribution of the cells at predetermined time intervals.

Also, when the cells are observed for a long time, the cells may be modified as they grow and may thus become out of focus.

Furthermore, as information technology (IT) and microscope technology are added together, when a microscope is combined with either a printed circuit board (PCB) with a microprocessor or a liquid crystal display (LCD) module, the culture of the cells may be influenced by heat generated from such an electronic component, thereby degrading the precision of an experiment result.

Accordingly, to solve these problems, there is a growing need to develop a microscope capable of being used regardless of place, preventing a sample from being polluted and vibrating when the sample is observed while moving the sample, observing cells and calculating a distribution of the cells for a long time at predetermined time intervals, performing auto-focusing as the cells change, and preventing an experiment result from being distorted by heat generated from the inside of the microscope.

### SUMMARY OF THE INVENTION

One or more embodiments of the present invention include a microscope capable of being used regardless of place by configuring an optical module to be separable from a control module to be disposed in even a narrow space such as the inside of a incubator or the inside of a clean bench, and preventing movement of a sample during observation of the sample to increase the stability of the sample.

One or more embodiments of the present invention include a microscope and a controlling method thereof, which are capable of automatically measuring a distribution of cells and displaying a growth curve of the cells in the form of graph at predetermined time intervals during a long-time process of culturing the cells, thereby increasing a user's convenience, and which are capable of performing auto-focusing as the cells grow to increase the precision of a captured image of the cells.

One or more embodiments of the present invention include a microscope and a controlling method thereof, which are capable of minimizing an influence of heat generated from the microscope during culture of cells, thereby increasing the precision of an experiment result.

To achieve these objects, the present invention provides a microscope comprising at least one optical module configured to form an image of a microscopic object placed on a stage, transform the image into an electric signal, and provide the electric signal; and at least one control module configured to receive the electric signal from the optical module, output an image, and control the at least one optical module according to a command input from a user, wherein the at least one optical module is separable from the control module to be independently disposed in a limited space.

A plurality of optical modules are used to simultaneously observe growth of a plurality of cell aggregates, and at least one control module is used to control the plurality of optical modules.

The at least one optical module comprises a light source unit configured to emit light onto the microscopic object, an object lens configured to form an image of the microscopic object placed on the stage, and an image sensor on which light passing through the object lens is incident and which is configured to transform the light into an electric signal.

The at least one optical module further comprises a first mirror configured to reflect, at a predetermined angle, the light emitted from the light source unit toward the microscopic object.

The at least one optical module further comprises a second mirror configured to reflect, at a predetermined angle, the light passing through the object lens toward the image sensor.

The at least one optical module further comprises a diffuser configured to diffuse the light emitted from the light source unit, a condensing lens configured to concentrate the light passing through the diffuser, and a filter configured to filter the light passing through the condensing lens.

The at least one optical module comprises at least one cooling device configured to circulate heat, which is generated in the at least one optical module, in the limited space so as to achieve thermal equilibrium.

The at least one optical module and the at least one control module communicate with each other in a wireless or wired manner.

The at least one control module comprises a display unit configured to receive the electric signal from the at least one optical module and output an image and a control unit configured to control the at least one optical module according to a command input from a user.

The at least one control unit captures images of the microscopic object and stores the images in a memory device in a predetermined cycle which is set by a user.

The control unit calculates a confluence which is a distribution of the cells based on the images of the microscopic object captured in the predetermined cycle and displays the confluence in the form of a graph or in the form of numerical values.

The control unit provides a video file by combining a file of the images of the microscopic object captured in the predetermined cycle according to a request from a user.

The control unit transmits an alarm to a user when the confluence reaches a predetermined level.

The at least one optical module comprises a focus control unit configured to adjust a focal point of an image to be captured, and the control unit controls the focus control unit to automatically control a focal point of an image as the cells grow.

To achieve these objects, the present invention provides a method of controlling a microscope in which an optical module for observing a microscopic object and a control module for controlling the optical module are separated from each other to independently dispose the optical module in a limited space, the method comprising capturing and storing images of a microscopic object in a predetermined cycle which is set by a user and analyzing the stored images to automatically measure a confluence which is a distribution of cells.

The method further comprises displaying a result of measuring the confluence in the form of a time-based graph or in the form of numerical values.

The method further comprises providing a video file by combining a file of the images of the microscopic object captured in the predetermined cycle according to a request from a user.

The method further comprises controlling a focus control unit to automatically control a focal point of an image as the cells which are the microscopic objects grow.

The method further comprises transmitting an alarm to a user when the confluence reaches a predetermined level.

According to the one or more of the above embodiments, an optical module of a microscope is configured to be separable from the other components of the microscope so that the optical module may be disposed in a narrow space such as the inside of an incubator or the inside of a clean bench. Accordingly, the optical module may be used regardless of place.

Also, the stability of a sample may be increased by preventing the sample from moving during observation of the sample.

Also, during a long-time process of culturing cells, measuring of a distribution of the cells and displaying of a cell growth curve in the form of graph may be automatically performed in a predetermined cycle, thereby increasing a user's convenience.

Also, a focus of an image of the cells may be automatically adjusted as the cells grow, thereby increasing the precision of images captured.

Also, an influence of heat generated from the microscope may be minimized during the culture of the cells, thereby increasing the precision of an experiment result.

### BRIEF DESCRIPTION OF THE DRAWINGS

FIG. 1 is a perspective view illustrating a state in which an optical module and a control module of a microscope are combined with each other and a state in which the optical module and the control module are separated from each other, according to an exemplary embodiment of the present invention;
FIG. 2 is a perspective view illustrating a state in which the optical module of the microscope of FIG. 1 is disposed in an incubator according to an exemplary embodiment of the present invention;
FIG. 3 a perspective view of an optical module of a microscope according to an exemplary embodiment of the present invention;
FIG. 4 is an exploded perspective view of the inside of an optical module of a microscope according to an exemplary embodiment of the present invention;
FIG. 5 is a front view of the inside of an optical module of a microscope according to an exemplary embodiment of the present invention;
FIG. 6 is a side view of the inside of an optical module of a microscope according to an exemplary embodiment of the present invention;
FIG. 7 is a diagram illustrating the structure of an optical system of a microscope according to an exemplary embodiment of the present invention;
FIG. 8 is a front view of a control module of a microscope according to an exemplary embodiment of the present invention;
FIG. 9 is a front view of the inside of a control module of a microscope according to an exemplary embodiment of the present invention;
FIGS. 10 to 12 illustrate control screens displayed on a display unit of a microscope according to exemplary embodiments of the present invention;
FIG. 13 is a graph comparing a cell culture curve observed and calculated by a microscope according to an exemplary embodiment of the present invention with an ideal cell culture curve; and
FIG. 14 illustrates an image showing a result of performing an experiment by applying a microscope according to an exemplary embodiment of the present invention to a wound healing assay.

### DETAILED DESCRIPTION

Hereinafter, exemplary embodiments of the present invention will be described in detail with reference to the accompanying drawings. The present invention may, however, be embodied in many different forms and should not be construed as limited to the embodiments set forth herein. Rather, these embodiments are provided so that this disclosure will be thorough and complete, and fully convey the scope of the invention to those skilled in the art. Throughout the specification, the same reference numbers may be used to denote similar components in various embodiments.

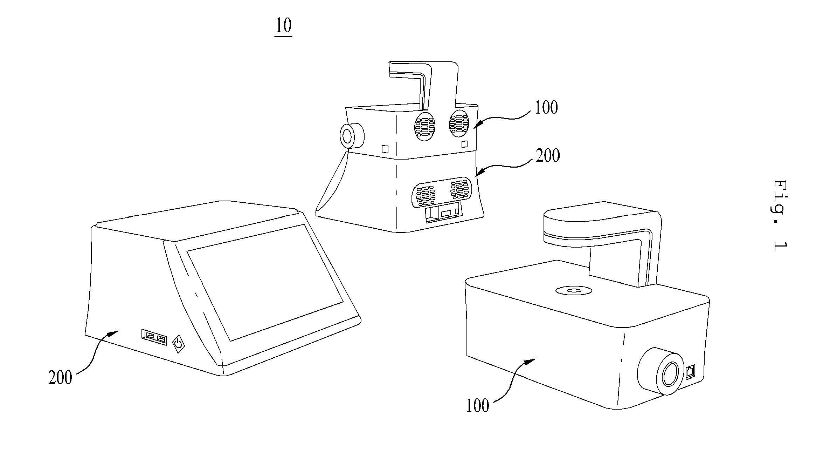

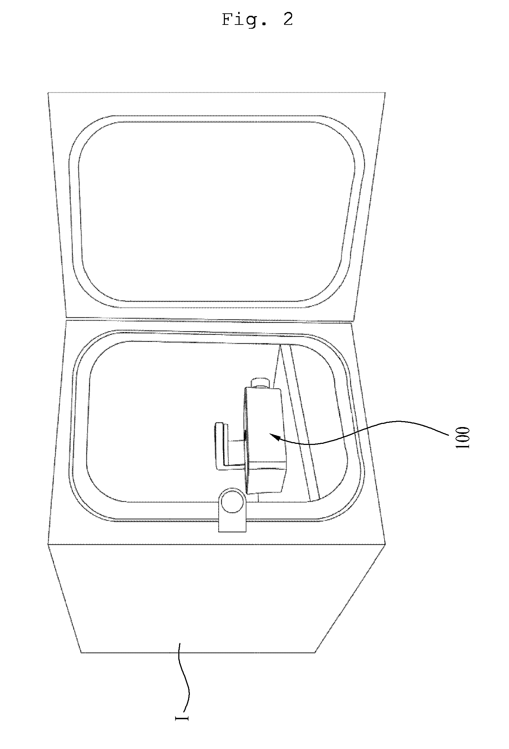

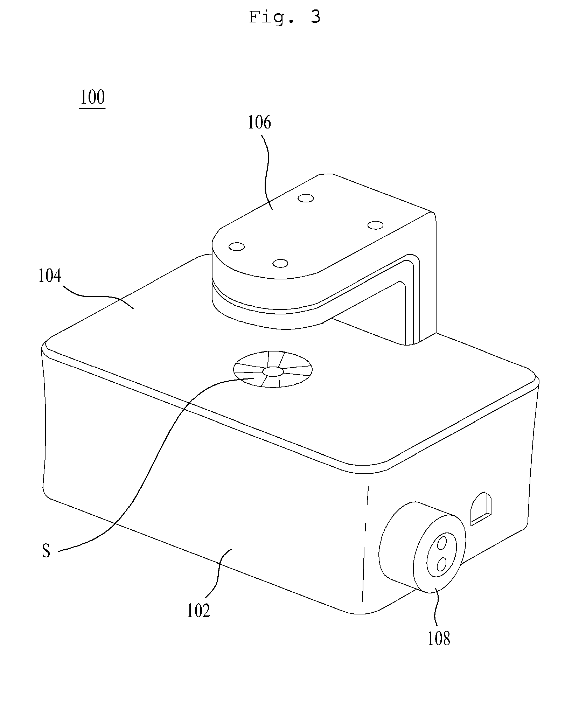

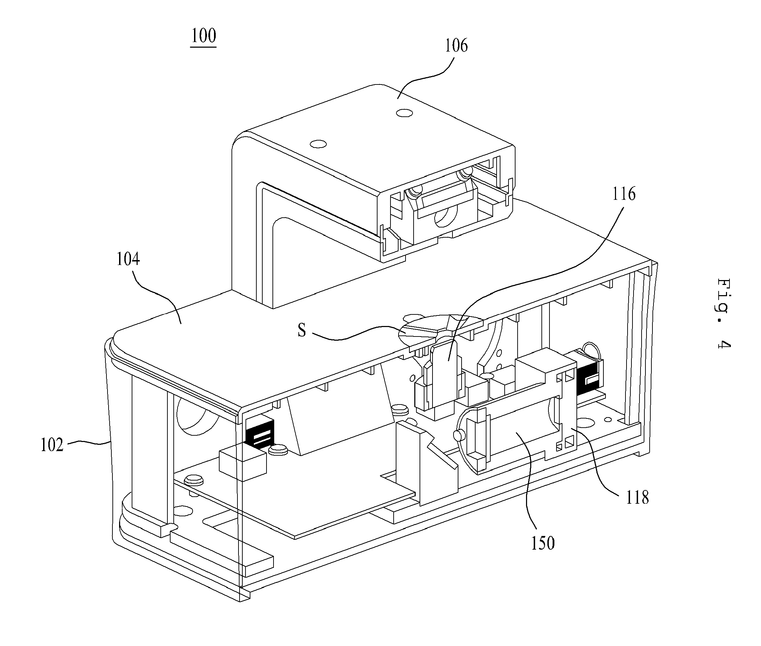

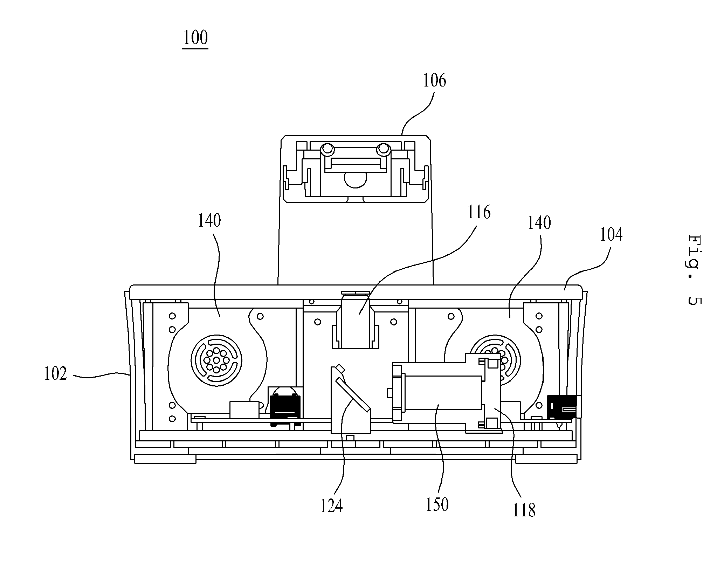

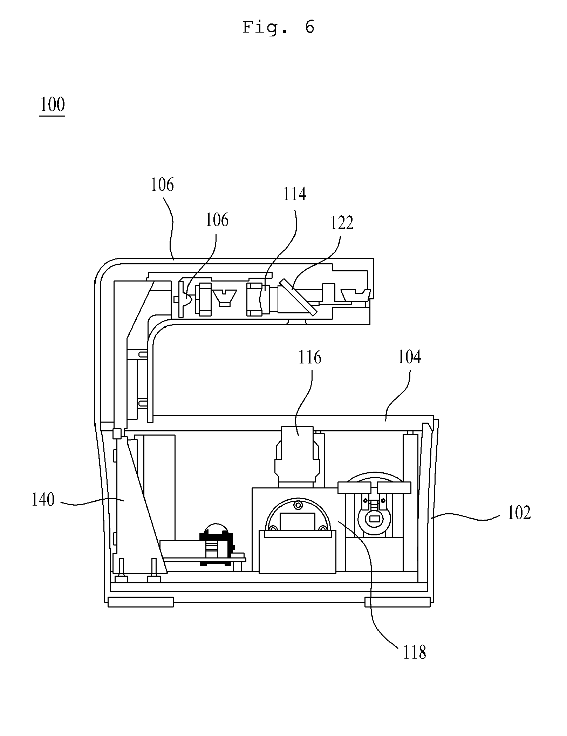

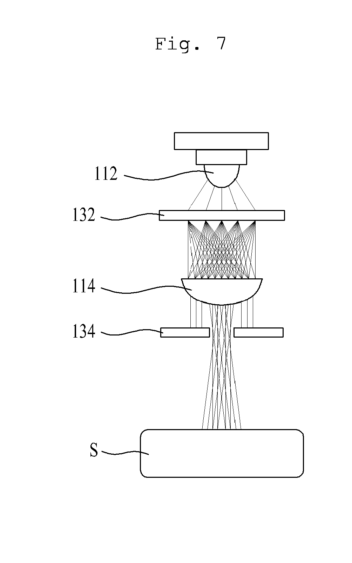

FIG. 1 is a perspective view illustrating a state in which an optical module and a control module of a microscope are combined with each other and a state in which the optical module and the control module are separated from each other, according to an exemplary embodiment of the present invention. FIG. 2 is a perspective view illustrating a state in which the optical module of the microscope of FIG. 1 is disposed in an incubator according to an exemplary embodiment of the present invention. FIG. 3 a perspective view of an optical module of a microscope according to an exemplary embodiment of the present invention. FIG. 4 is an exploded perspective view of the inside of an optical module of a microscope according to an exemplary embodiment of the present invention. FIG. 5 is a front view of the inside of an optical module of a microscope according to an exemplary embodiment of the present invention. FIG. 6 is a side view of the inside of an optical module of a microscope according to an exemplary embodiment of the present invention. FIG. 7 is a diagram illustrating the structure of an optical system of a microscope according to an exemplary embodiment of the present invention

Referring to FIGS. 1 to 7, a microscope 10 according to an exemplary embodiment of the present invention may be largely includes at least one optical module (e.g., an optical module 100) that forms an image of a microscopic object placed on a stage S and transforms the image into an electric signal; and at least one control module (e.g., a control module 200) that receives the electric signal from the optical module 100, outputs the image, and controls the optical module 100 according to a command input from a user.

The optical module 100 may be embodied as an independent module that is separable from the control module 200 so that the optical module 100 may be individually disposed in a limited space configured to culture cells.

Although FIG. 1 illustrates a case in which one optical module 100 and one control module 200 are used, a plurality of optical modules 100 may be installed to simultaneously observe growth of a plurality of cell aggregates, and at least one control module 200 may be installed to control the plurality of optical modules 100.

By configuring the optical module 100 as an independent module that is separable from the control module 200, the optical module 100 may be disposed in a narrow space such as the inside of an incubator I or the inside of a clean bench as illustrated in FIG. 2 and thus a sample may be efficiently observed while culturing cells.

This is because the optical module 100 that includes a light source, a lens, etc. is configured to be separable from the control module 200 that includes a display, etc. and may be thus manufactured in a compact size by reducing the whole size of the optical module 100.

In addition, since the optical module 100 and the control module 200 may be reduced in size, they may be easily carried and stored. Furthermore, as illustrated in FIG. 1, the optical module 100 and the control module 200 may be used in a state in which they are combined with each other or are separated from each other according to a user's selection. Accordingly, the whole microscope 10 may be efficiently managed.

Also, since the optical module 100 and the control module 200 may be separated from each other, a researcher need not have to take a sample out of an incubator and move the sample onto the microscope 10 so as to observe the sample. Thus, since the sample is not moved during culture thereof, the sample may be prevented from being exposed to an external environment and polluted.

Furthermore, since the sample is not moved during culture thereof, an image of the sample may be continuously obtained at the same position. Thus, a change in the sample may be very precisely measured in chronological order and video may be manufactured using obtained images.

Also, a focus of an image may be prevented from blurring due to vibration caused by movement of the sample and manipulation of the control module 200, thereby achieving a more stable and precise experiment result.

The optical module 100 and the control module 200 may be configured to communicate with each other in a wireless/wired manner. That is, the optical module 100 and the control module 200 may each include a communication unit (not shown) to exchange a control command or data such as an image with each other. In this case, a wired communication manner using a communication cable may be employed.

Here, a flat cable (not shown) may be used as a communication cable connecting the optical module 100 and the control module 200 or a power cable for supplying power to the optical module 100, so that the optical module 100 may be stably disposed in the incubator I.

When the wireless communication manner is employed, infrared communication, a radio-frequency (RF) manner, a Bluetooth manner, WI-FI, code division multiple access (CDMA), etc. may be used.

The optical module 100 may largely includes a light source unit 112 that emits light onto a microscopic object placed on the stage S, an object lens 116 that forms an image of the microscopic object placed on the stage S, and an image sensor 118 to which light passing through the object lens 116 is supplied and which transforms the light into an electric signal.

In detail, the optical module 100 may include an optical module body 102 that forms the exterior of the optical module 100, and a top cover 104 disposed on the upper part of optical module body 102. A focus control handle 108 through which a user may manually perform focus control may be formed at a side of the optical module body 102.

A head unit 106 is disposed on a side of an upper part of the optical module body 102 to be connected to the optical module body 102. The head unit 106 may extend by a predetermined height upward from the optical module body 102, bend in a forward direction, and extend by a predetermined length.

In the head unit 106, the light source unit 112 that emits light, a condensing lens 114 that concentrates the light emitted from the light source unit 112, and a first mirror 122 that reflects, at a predetermined angle, the light emitted from the light source unit 112 toward the microscopic object are disposed.

The light source unit 112 may use a light-emitting diode (LED) as a light source. In detail, the light source unit 112 may include a white LED.

The light reflected from the first mirror 122 passes through the microscopic object placed on the stage S and is then incident on the object lens 116.

The stage S may be positioned on the top cover 104 of the optical module 100. The stage S has a predetermined area so that a sample including the microscopic object (such as a cell, etc.) to be observed may be placed thereon.

The object lens 116 is disposed below the stage S. Light passing through the object lens 116 is reflected from a second mirror 124, is guided to the image sensor 118, arrives at the image sensor 118, and is then transformed into an electric signal by the image sensor 118. The electric signal is transmitted to the display unit 210 of the control module 200 of (which will be described below) and is then output in the form of an image that is visible to a user's eyes.

A focus control unit 150 that includes a motor is installed at a side of the image sensor 118. The focus control unit 150 may be driven using the focus control handle 108 described above or a control unit (which will be described below) to perform focus control.

In the present embodiment, the first mirror 122 and the second mirror 124 are employed to minimize a space occupied by a path of light so that the size of the optical module 100 may be minimized to be disposed in the incubator I.

That is, a path of light emitted in a forward direction from the light source unit 112 included in the head unit 106 is changed by the first mirror 122 toward the microscopic object placed on the stage S below the first mirror 122. The light passing through the microscopic object and the object lens 116 is reflected from the second mirror 124 so that the path of the light is changed again toward the image sensor 118.

Here, the optical module 100 may include at least one cooling device for circulating heat generated in the optical module 100 in a limited space, i.e., the incubator I, to achieve thermal equilibrium. If heat generated in the optical module 100 is neglected, bubbles may be generated in the cells to be observed to prevent the cells from normally growing.

In detail, the optical module 100 may include a first cooling fan 140 as a cooling device at a back surface of the optical module body 102. Thus, during the observation of the cells, the first cooling fan 140 may be operated to suppress heat from being generated in the optical module 100, thereby minimizing an influence on culture of the cells, caused by heat.

According to an embodiment of the present invention, a structure of the optical module 100 for optical processing will be described in detail below. The optical module 100 may include a diffuser 132 that diffuses light emitted from the light source unit 112, the condensing lens 114 that concentrates the light passing through the diffuser 132, and a filter 134 that filers the light passing through the condensing lens 114.

The above structure of the optical module 100 is designed to improve a linear property of light to be incident on the cells, i.e., the microscopic object, in an optical system of the optical module 100 as illustrated in FIG. 7. To this end, the optical module 100 further includes the diffuser 132 and the filter 134. Thus, only straight lights may be emitted onto the sample if possible so that the exterior of the cells, i.e., the shadows of the cells, may be clearly seen to precisely measure a distribution of the cells.

In detail, the distribution of the cells may be automatically measured based on images of the cells captured by the image sensor 118. When the outlines of the cells are unclearly formed in the images thereof, an error is highly likely to occur during calculation of the distribution of the cells. However, this problem may be prevented by configuring the optical module 100 as described above.

In FIG. 7, the structure of the optical module 100 illustrated in FIGS. 3 to 6 to minimize the size of an optical path using the first mirror 122 and the second mirror 124 is also applied, but the first mirror 122 is omitted to display an optical path in a simple manner.

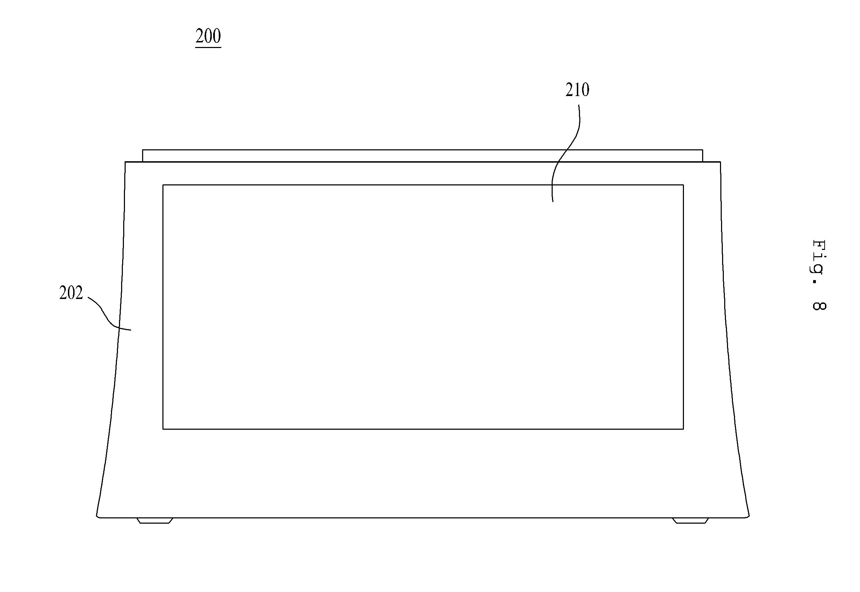

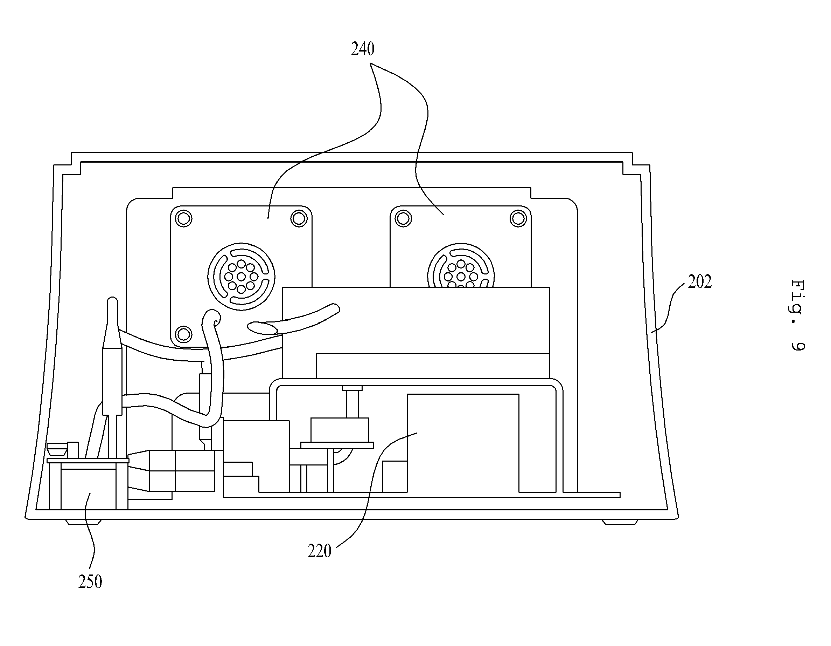

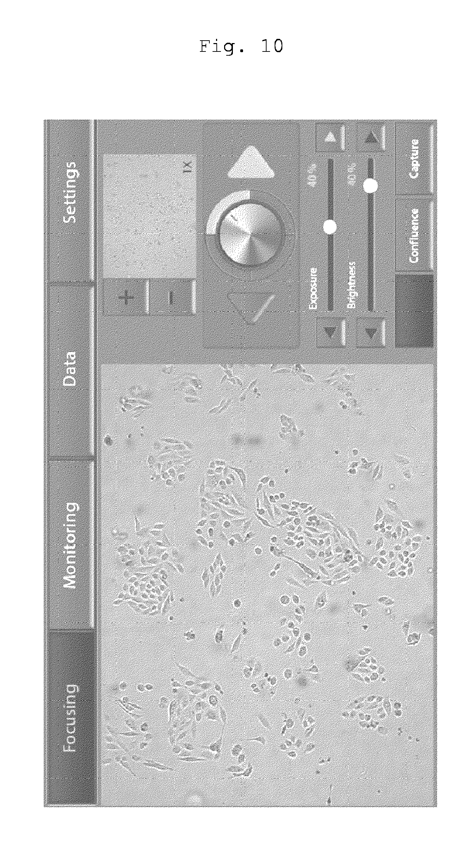

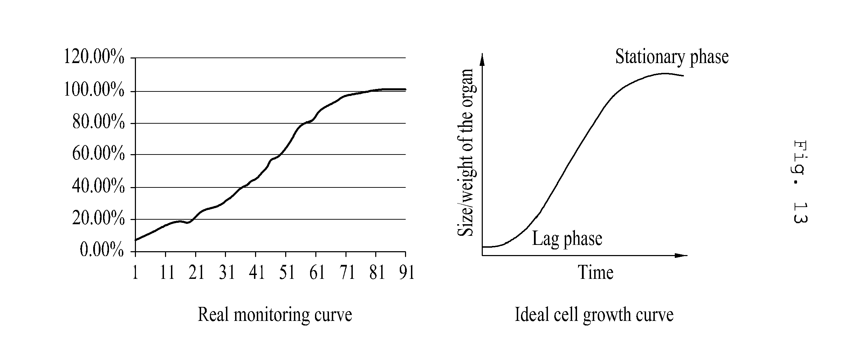

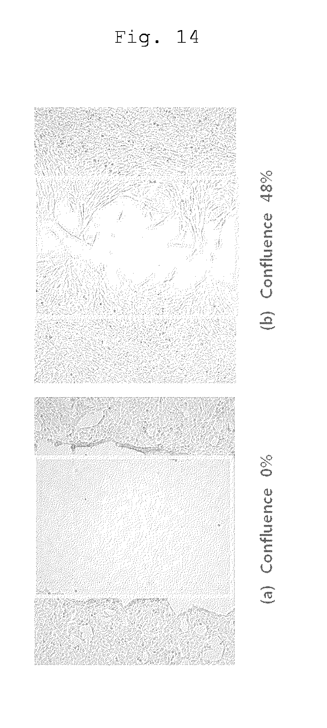

FIG. 8 is a front view of a control module of a microscope according to an exemplary embodiment of the present invention. FIG. 9 is a front view of the inside of the control module of the microscope according to an exemplary embodiment of the present invention. FIGS. 10 to 12 illustrate control screens displayed on a display unit of a microscope according to exemplary embodiments of the present invention. FIG. 13 is a graph comparing a cell culture curve observed and calculated by a microscope according to an exemplary embodiment of the present invention with an ideal cell culture curve. FIG. 14 illustrates an image showing a result of performing an experiment by applying a microscope according to an exemplary embodiment of the present invention to a wound healing assay.

Referring to FIGS. 1 to 14, the control module 200 may include the display unit 210 that receives an electric signal from the optical module 100 and outputs an image, and the control unit that control the optical module 100 according to a command input from a user.

In detail, the control module 200 includes a control module body 202 that forms the exterior of the control module 200, and the display unit 210 installed on a front surface of the control module body 202 to output an image. The display unit 210 may be embodied as an LCD, and include not only an image outputting function but also a touch screen function of performing various control functions on a screen.

FIGS. 10 to 12 specifically illustrate a structure of the display unit 210 that includes the image outputting function and the touch screen function. FIG. 10 illustrates a screen for performing focus control. A user may perform focus control by using the focus control handle 108 of FIG. 3 or touching a screen displayed on the display unit 210. In addition, the intensity of light may be controlled and exposure control may be performed.

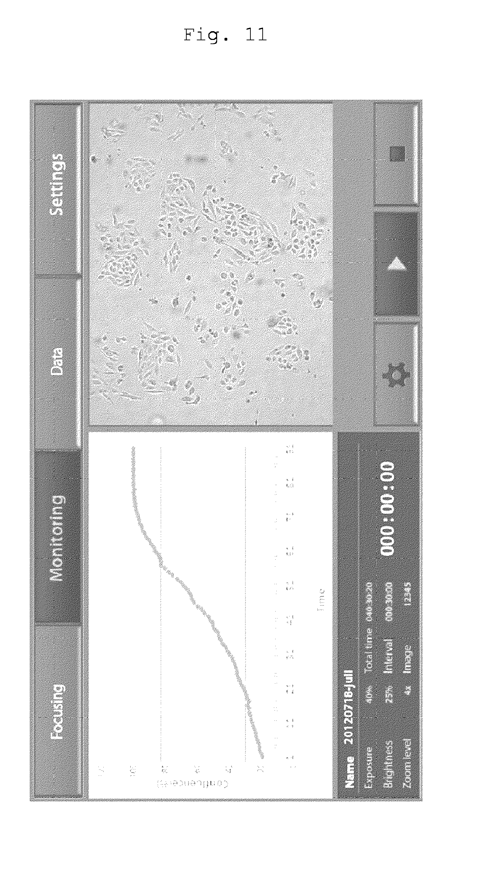

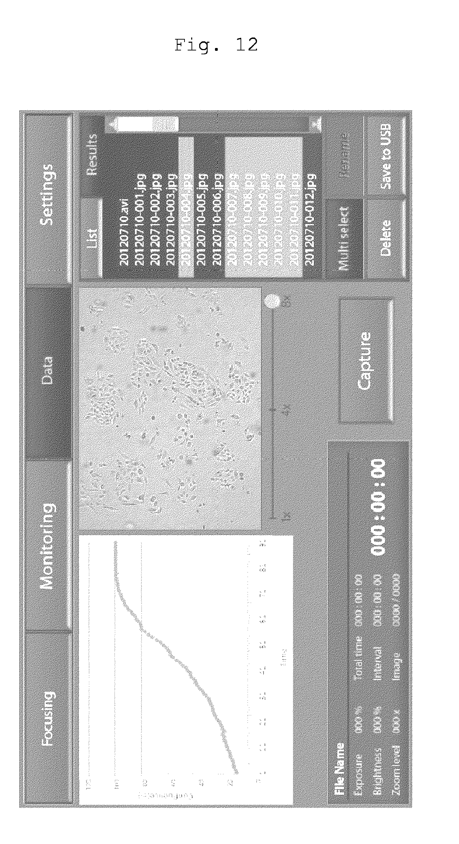

FIG. 11 illustrates a screen for observing cells, whereby an observation time, an image-storing cycle, etc. may be set and an image or graph showing a result of observing the cells may be checked. FIG. 12 illustrates a screen for managing stored data, whereby a stored image may be managed (e.g., the stored image may be invoked or deleted) and image files may be combined to manufacture a video file.

However, screens that may be displayed on the display unit 210 are not limited to those illustrated in FIGS. 10 to 12 and may be embodied in many different forms according to a user's convenience.

A second cooling fan 240 may be installed at the rear of the control module body 202 to cool heat generated in the control module 200.

The control module 200 may further include the control unit that controls overall operations of the microscope 10. The control unit may include a printed circuit board (PCB) 220 with a microprocessor.

The control unit may control a focus of an image, an image-storing cycle, the intensity of a light source, etc. according to a command input from a user; automatically measure a distribution of cells (confluence) by analyzing stored images in a predetermined cycle; and display a result of measuring the distribution of the cells (confluence) in the form of a time-based graph or numerical values.

That is, in the microscope 10 according to an embodiment of the present invention, the control unit may capture images of a microscopic object and store the images in a memory device in a predetermined cycle that is set by a user. Thus, a time-lapse function may be performed, a distribution of cells (confluence) may be calculated based on the images of the microscopic object captured in the predetermined cycle, and a growth curve of the cells may be displayed in the form of a graph.

In particular, the control unit may control the focus control unit 150 of FIG. 4 to perform fine focus control in the optical module 100. That is, the control unit may control the motor of the focus control unit 150 in a wired/wireless communication manner, and thus focus control may be performed in the optical module 100 even outside the incubator I.

A focal point of a sample to be observed may change due to external shock or vibration which may occur, for example, when a door of the incubator I is opened and closed. Since the focal point of the sample may be readjusted even outside the incubator I by using the control unit, a temperature change in the incubator I that may occur when the door of the incubator I is opened and closed to perform focus control may be prevented.

Also, when the cells are observed for a long time, a focus of the cells may change as the cells grow and thus clear images of the cells may not be obtained. However, the control unit performs auto-focusing using the focus control unit 150 when images of the cells are captured in the predetermined cycle, so that the cells may be focused automatically and most appropriately to obtain images thereof, thereby preventing an error from occurring due to a focal change.

Furthermore, a plurality of images of the cells may be captured by changing a focal point of the cells while moving the motor of the focus control unit 150 and image processing may be performed to obtain and store an image that is most appropriately in focus.

In all the above processes, the driving of the focus control unit 150, the obtaining of the images, and the performing of image processing may be automatically performed using the control unit without receiving external inputs.

Also, the control unit may be configured to transmit an alarm to a user when the growth curve of the cells enters a stationary phase or a distribution of the cells reaches a predetermined level. In this case, the predetermined level may be variously set, e.g., 60%, 80%, or 100%, and may be changed by a user if needed.

The reason why the alarm is transmitted to a user is because the cells are cultured and observed for a long time and thus although the distribution of the cells reaches a desired level or the growth curve of the cells enters the stationary phase, the user may not recognize this.

The control module 200 may further include a communication port 250 that includes a universal serial bus (USB) port and a local area network (LAN) port as illustrated in FIG. 9.

According to an embodiment of the present invention, the control module 200 of the microscope 10 may establish wireless communication by connecting a wireless dongle to the USB port, and establish wired communication by accessing a network by being directly connected to the LAN port of the control unit.

Also, the control unit may control the optical module 100 that establish communication with the control module 200 by using the USB port or the LAN port.

Also, when the control unit is connected to an external device via a network and a cell growth rate reaches a desired rate during an analysis of images of the cells for a long time, the control unit may transmit an alarm to a user through a designated mail, provided personal computer (PC) software, or a mobile phone message.

Also, a user may be able to receive and view data containing a result of observing the cells through a PC at a remote place by using the provided PC software, and may access the control unit via a network to control the optical module 100 through the user's PC.

Furthermore, a user may be able to manipulate the functions of the control unit by accessing the control unit in the outside with the user's smartphone in a wireless manner by using a smartphone application provided to the user.

In the microscope 10 according to an embodiment of the present invention, electronic components that generate a large amount of heat are installed in the control module 200 rather than the optical module 100, so that heat may be suppressed in the optical module 100 in which the cells are observed.

That is, the PCB 220 that includes a microprocessor, the display unit 210 embodied as an LCD, and the like are representative examples of components that generate a large amount of heat. Thus, these components are installed in the control module 200 rather than the optical module 100, thereby decreasing a probability that an experiment result will be distorted due to heat to a minimum level.

According to the above embodiments, when cells are cultured using the microscope 10 according to an embodiment of the present invention, a cell growth curve that is substantially the same as an ideal cell growth curve may be achieved as illustrated in FIG. 13. Also, since the cells may be automatically observed to calculate a distribution of the cells and exactly display the cell growth curve in the form of a graph, a user may conveniently culture and observe the cells.

FIG. 14 illustrates an image showing a result of performing an experiment by applying the microscope 10 according to an exemplary embodiment of the present invention to a wound healing assay. In the experiment, restoration of damaged cells was observed to study proliferation, migration rates of various cells, and control of cytoskeletons under various cell culture conditions.

FIG. 14(a) illustrates an image showing a result of artificially damaging cells that have grown normally. In this case, a distribution of the cells (confluence) was measured to be 0 %. FIG. 14(b) illustrates an image showing a result of observing a sample that was stored in an incubator for forty eight hours. In this case, a distribution of the cells (confluence) increased by 48 %. This experiment was conducted using NIH-3T3 cells.

According to the one or more of the above embodiments, in a microscope, an optical module is configured to be separable from the other components of the microscope so that the optical module may be disposed in a narrow space such as the inside of an incubator or the inside of a clean bench. Accordingly, the optical module may be used regardless of place. During a long-time process of culturing cells, measuring of a distribution of the cells and displaying of a cell growth curve in the form of graph may be automatically performed in a predetermined cycle, thereby increasing a user's convenience. Also, heat is suppressed from being generated from electronic components included in the microscope, thereby preventing an experiment result from being distorted during the culture of the cells.

Although the present invention has been described above with reference to the exemplary embodiments thereof, it would be understood by those skilled in the art that various changes and modifications may be made without departing from the technical conception and essential features of the present invention. Thus, it is clear that all modifications are included in the technical scope of the present invention as long as they include the components as claimed in the claims of the present invention.

## Claims

1. A microscope comprising:
at least one optical module configured to form an image of a microscopic object placed on a stage, transform the image into an electric signal, and provide the electric signal; and
at least one control module configured to receive the electric signal from the optical module, output an image, and control the at least one optical module according to a command input from a user,
wherein the at least one optical module is separable from the control module to be independently disposed in a limited space.

2. The microscope of claim 1, wherein a plurality of optical modules are used to simultaneously observe growth of a plurality of cell aggregates, and
at least one control module is used to control the plurality of optical modules.

3. The microscope of claim 1, wherein the at least one optical module comprises:
a light source unit configured to emit light onto the microscopic object;
an object lens configured to form an image of the microscopic object placed on the stage; and
an image sensor on which light passing through the object lens is incident and which is configured to transform the light into an electric signal.

4. The microscope of claim 3, wherein the at least one optical module further comprises:
a first mirror configured to reflect, at a predetermined angle, the light emitted from the light source unit toward the microscopic object; and
a second mirror configured to reflect, at a predetermined angle, the light passing through the object lens toward the image sensor.

5. The microscope of claim 4, wherein the at least one optical module further comprises:
a diffuser configured to diffuse the light emitted from the light source unit;
a condensing lens configured to concentrate the light passing through the diffuser; and
a filter configured to filter the light passing through the condensing lens.

6. The microscope of claim 1, wherein the at least one optical module comprises at least one cooling device configured to circulate heat, which is generated in the at least one optical module, in the limited space so as to achieve thermal equilibrium.

7. The microscope of claim 1, wherein the at least one optical module and the at least one control module communicate with each other in a wireless or wired manner.

8. The microscope of claim 1, wherein the at least one control module comprises:
a display unit configured to receive the electric signal from the at least one optical module and output an image; and
a control unit configured to control the at least one optical module according to a command input from a user.

9. The microscope of claim 8, wherein the at least one control unit captures images of the microscopic object and stores the images in a memory device in a predetermined cycle which is set by a user.

10. The microscope of claim 9, wherein the control unit calculates a confluence which is a distribution of the cells based on the images of the microscopic object captured in the predetermined cycle and displays the confluence in the form of a graph or in the form of numerical values.

11. The microscope of claim 10, wherein the control unit transmits an alarm to a user when the confluence reaches a predetermined level.

12. The microscope of claim 9, wherein the control unit provides a video file by combining a file of the images of the microscopic object captured in the predetermined cycle according to a request from a user.

13. The microscope of claim 8, wherein the at least one optical module comprises a focus control unit configured to adjust a focal point of an image to be captured, and
the control unit controls the focus control unit to automatically control a focal point of an image as the cells grow.

14. A method of controlling a microscope in which an optical module for observing a microscopic object and a control module for controlling the optical module are separated from each other to independently dispose the optical module in a limited space, the method comprising:
capturing and storing images of a microscopic object in a predetermined cycle which is set by a user; and
analyzing the stored images to automatically measure a confluence which is a distribution of cells.

15. The method of claim 14, further comprising displaying a result of measuring the confluence in the form of a time-based graph or in the form of numerical values.

16. The method of claim 14, further comprising providing a video file by combining a file of the images of the microscopic object captured in the predetermined cycle according to a request from a user.

17. The method of claim 14, further comprising controlling a focus control unit to automatically control a focal point of an image as the cells which are the microscopic object grow.

18. The method of claim 14, further comprising transmitting an alarm to a user when the confluence reaches a predetermined level.
